# EUROPEAN PATENT APPLICATION

(11) **EP 4 231 705 A1**
(43) Date of publication of application: **23.08.2023**
(21) Application number: 20961075.7
(22) Date of filing: 11.11.2020
(51) Int. Cl.: H04W 36/00, H04W 76/27, H04W 12/04

(54) **COMMUNICATION METHOD, APPARATUS AND SYSTEM**

(71) Applicant: Huawei Technologies Co., Ltd., Shenzhen, Guangdong 518129 (CN)
(72) Inventor: YU, Guohua, Shenzhen, Guangdong 518129 (CN)
(74) Representative: Goddar, Heinz J.
(86) International application number: PCT/CN2020/128172
(87) International publication number: WO 2022/099516

(57) **Abstract**

This application discloses a communication method, apparatus, and system, and is applied to the field of mobile communication. The method includes: A first access network device sends a first message to a second access network device, to request to retrieve context information of a terminal device, where the first message includes first information, and the first information includes PLMN identification information of a target cell, a CGI of the target cell, or a first PCI and a first ARFCN, where the first PCI is a physical cell identifier of the target cell of the terminal device served by the first access network device, and the first downlink ARFCN is a downlink ARFCN of the target cell of the terminal device served by the first access network device. The second access network device generates a key based on the first information or based on the PCI and the downlink ARFCN of the target cell that are determined based on the first information, and sends a second message to the second access network, where the second message is for transferring the context information of the terminal device, and the second message includes the generated key. According to the method, a failure caused by key inconsistency in an RRC resume process or an RRC re-establishment process can be avoided.

## Description

### TECHNICAL FIELD

This application relates to the field of mobile communication technologies, and in particular, to a communication method, apparatus, and system.

### BACKGROUND

A network sharing technology is supported in a long term evolution (Long Term Evolution, LTE) mobile communication system and fifth-generation (Fifth-Generation, 5G) mobile communication technology new radio (New Radio, NR). Network sharing is sharing of a wireless network among different operators, and includes sharing of a base station or one or more cells of a base station among a plurality of operators to provide services for the plurality of operators. Network sharing enables an operator to quickly deploy a network by using a network of another operator, to reduce investment costs.

However, the inventor of this application finds that, in a network sharing scenario, a radio resource control (Radio Resource Control, RRC) connection re-establishment failure or an RRC connection resume failure may occur.

### SUMMARY

Embodiments of this application provide a communication method, apparatus, and system. According to technical solutions provided in this application, a key used by a first access network device can be consistent with a key used by a terminal device. This avoids a failure caused by key inconsistency in an RRC resume process or an RRC re-establishment process.

According to a first aspect, a communication method is provided. It may be understood that the method according to the first aspect may be performed by a first apparatus, and the first apparatus may be a communication device or a communication apparatus, for example, a chip system, that can support the communication device in implementing a function required by the method. For example, the communication device may be a second access network device. An example in which the method is implemented by the second access network device is used below for description.

The method includes: The second access network device receives a first message from a first access network device, where the first message is for requesting to transfer context information of a terminal device, and the first message includes first information, where the first information includes PLMN identification information of a target cell of the terminal device served by the first access network device, a CGI of the target cell of the terminal device served by the first access network device, or a first PCI and a first ARFCN, where the first PCI is a physical cell identifier of the target cell of the terminal device served by the first access network device, and the first downlink ARFCN is a downlink ARFCN of the target cell of the terminal device served by the first access network device. The second access network device generates a key based on the first information or based on the PCI and the downlink ARFCN of the target cell that are determined based on the first information, and sends a second message to the second access network, where the second message is for transferring the context information of the terminal device, and the second message includes the generated key. According to the method, it is ensured that the key used by the first access network device is consistent with a key used by the terminal device. This avoids a failure caused by key inconsistency in an RRC resume process or an RRC re-establishment process.

In some possible implementations of the first aspect, the second access network device determines the target cell based on the received PLMN identification information that is included in the first message and that is of the target cell of the terminal device served by the first access network device or the CGI of the target cell of the terminal device served by the first access network device, obtains the PCI and the downlink ARFCN of the target cell, and then generates the key based on the PCI and the downlink ARFCN of the target cell.

In some possible implementations of the first aspect, the second access network device generates the key based on the first PCI and the first downlink ARFCN in the received first message. According to the method, implementation complexity of the second access network device is low.

According to a second aspect, a communication method is further provided. It may be understood that the method according to the second aspect may be performed by a second apparatus, and the second apparatus may be a communication device or a communication apparatus, for example, a chip system, that can support the communication device in implementing a function required by the method. For example, the communication device may be a first access network device. An example in which the method is implemented by the first access network device is used below for description.

The method includes: The first access network device sends a first message to a second access network device, where the first message is for requesting to transfer context information of a terminal device, and the first message includes first information, where the first information includes PLMN identification information of a target cell of the terminal device served by the first access network device, a CGI of the target cell of the terminal device served by the first access network device, or a first PCI and a first ARFCN, where the first PCI is a physical cell identifier of the target cell of the terminal device served by the first access network device, and the first downlink ARFCN is a downlink ARFCN of the target cell of the terminal device served by the first access network device. The first access network device receives a second message from the second access network device, where the second message is for transferring the context information of the terminal device, the second message includes a key, and the key is generated by the second access network device based on the first information or based on the PCI and the downlink ARFCN of the target cell that are determined based on the first information. The first access network device communicates with the terminal device based on the key. According to the method, it is ensured that the key used by the first access network device is consistent with a key used by the terminal device. This avoids a failure caused by key inconsistency in an RRC resume process or an RRC re-establishment process.

According to a third aspect, a communication method is further provided. It may be understood that the method according to the first aspect may be performed by a first apparatus, and the first apparatus may be a communication device or a communication apparatus, for example, a chip system, that can support the communication device in implementing a function required by the method. For example, the communication device may be a second access network device. An example in which the method is implemented by the second access network device is used below for description.

The method includes: The second access network device receives a first message from a first access network device, where the first message is for requesting to transfer context information of a terminal device, the first message includes a first cell identity, and the first cell identity is a unique cell identity that is of a target cell of the terminal device served by the first access network device and that is within a public land mobile network PLMN. The second access network device determines a plurality of candidate target cells having the first cell identity. The second access network device generates a plurality of keys corresponding to the plurality of candidate target cells, where the second access network device generates a corresponding key for each candidate target cell. The second access network device sends a second message to the first access network device, where the second message is for transferring the context information of the terminal device, and the second message includes the plurality of keys and cell information of the candidate target cells respectively corresponding to the plurality of keys. According to the method, it can be ensured that a key used by the first access network device is consistent with a key used by the terminal device. This avoids a failure caused by key inconsistency in an RRC resume process or an RRC re-establishment process.

Optionally, when identifying the candidate target cells, the second access network device may further determine that the candidate target cells need to be cells served by the first access network device, to be specific, the candidate target cells are cells that are served by the first access network device and that have the first cell identity. If a cell is not served by the first access network device, even if a CellIdentity of the cell is the same as the received CellIdentity of the target cell, the second access network device does not consider the cell as a candidate target cell. In this way, a quantity of candidate target cells can be reduced, so that calculation overheads for generating the key and signaling overheads for the second message can be reduced.

In some possible implementations of the third aspect, the second access network device generates a corresponding key based on a PCI and a downlink ARFCN of each of the plurality of candidate target cells.

In some possible implementations of the third aspect, the cell information of the candidate target cell includes PLMN identification information of the candidate target cell, a CGI of the candidate target cell, or a PCI and a downlink ARFCN of the candidate target cell, to identify or distinguish different candidate target cells.

It should be noted that the third aspect may be used in combination with another aspect, for example, used in combination with the first aspect. When the first message includes first information, the method provided in the first aspect may be performed. When the first message does not include the first information, the method provided in the third aspect may be performed.

According to a fourth aspect, a communication method is further provided. It may be understood that the method according to the fourth aspect may be performed by a second apparatus, and the second apparatus may be a communication device or a communication apparatus, for example, a chip system, that can support the communication device in implementing a function required by the method. For example, the communication device may be a first access network device. An example in which the method is implemented by the first access network device is used below for description.

The method includes: The first access network device sends a first message to a second access network device, where the first message is for requesting to transfer context information of a terminal device, the first message includes a first cell identity, and the first cell identity is a unique cell identity that is of a target cell of the terminal device served by the first access network device and that is within a public land mobile network PLMN. The first access network device receives a second message from the second access network device, where the second message is for transferring the context information of the terminal device, the second message includes a plurality of keys and cell information of candidate target cells respectively corresponding to the plurality of keys, and the candidate target cells are cells having the first cell identity. The first access network device selects, based on the cell information of the candidate target cells, a key corresponding to the target cell. The first access network device communicates with the terminal device based on the selected key. According to the method, it can be ensured that the key used by the first access network device is consistent with a key used by the terminal device. This avoids a failure caused by key inconsistency in an RRC resume process or an RRC re-establishment process.

Optionally, the candidate target cells are cells that are served by the first access network device and that have the first cell identity.

In some possible implementations of the fourth aspect, the cell information of the candidate target cell includes PLMN identification information of the candidate target cell, a CGI of the candidate target cell, or a PCI and a downlink ARFCN of the candidate target cell.

In some possible implementations of the fourth aspect, the first access network device selects a key corresponding to a candidate target cell that has same PLMN identification information as the target cell, the first access network device selects a key corresponding to a candidate target cell that has a same CGI as the target cell, or the first access network device selects a key corresponding to a candidate target cell that has a same PCI and a same downlink ARFCN as the target cell.

According to a fifth aspect, a communication method is further provided. It may be understood that the method according to the fifth aspect may be performed by a first apparatus, and the first apparatus may be a communication device or a communication apparatus, for example, a chip system, that can support the communication device in implementing a function required by the method. For example, the communication device may be a second access network device. An example in which the method is implemented by the second access network device is used below for description.

The method includes: The second access network device receives a first message from a first access network device, where the first message is for requesting to transfer context information of a terminal device, the first message includes a first cell identity, and the first cell identity is a unique cell identity that is of a target cell of the terminal device served by the first access network device and that is within a public land mobile network PLMN. The second access network device determines that there are a plurality of candidate target cells having the first cell identity. The second access network device rejects transfer of the context information of the terminal device, and sends a third message to the first access network device, to indicate that the context information of the terminal device fails to be transferred. According to the method, data transmission of the terminal device can be resumed more quickly, and transmission interruption time of user data of the terminal device can be reduced.

Optionally, the third message includes a cause value, and the cause value may indicate that a failure cause is that there are a plurality of candidate target cells, the target cell cannot be determined, a key cannot be generated, or the like.

It should be noted that the fifth aspect may be used in combination with another aspect, for example, used in combination with the first aspect. When the first message includes first information, the method provided in the first aspect may be performed. When the first message does not include the first information, the method provided in the fifth aspect may be performed.

According to a sixth aspect, a communication method is further provided. It may be understood that the method according to the sixth aspect may be performed by a first apparatus, and the first apparatus may be a communication device or a communication apparatus, for example, a chip system, that can support the communication device in implementing a function required by the method. For example, the communication device may be a second access network device. An example in which the method is implemented by the second access network device is used below for description.

The method includes: The second access network device receives a first message from a first access network device, where the first message is for requesting to transfer context information of a terminal device, the first message includes a first cell identity, and the first cell identity is a unique cell identity that is of a target cell of the terminal device served by the first access network device and that is within a public land mobile network PLMN. The second access network device determines the target cell based on the CellIdentity of the target cell and a PLMN identifier of the terminal device served by the second access network device, and generates a key by using a PCI and a downlink ARFCN of the target cell. The second access network device sends a second message to the first access network device, to transfer the context information of the terminal device to the first access network device, where the second message includes the generated key. According to the method, a correctness rate of the generated key can be improved, so that a failure rate caused by key inconsistency in an RRC resume process or an RRC re-establishment process is reduced.

In some possible implementations of the sixth aspect, the second access network device first identifies a candidate target cell based on the received CellIdentity of the target cell. If the second access network device identifies a plurality of candidate target cells having the CellIdentity, the second access network device may select, as the target cell, a candidate target cell that has a same PLMN identifier as that of the terminal device served by the second access network device, and then generate the key based on the PCI and the ARFCN of the target cell. Optionally, if only one candidate target cell is identified, a PCI and an ARFCN of the candidate target cell are directly used to generate the key.

In some possible implementations of the sixth aspect, the second access network device determines the target cell based on the received CellIdentity of the target cell and the PLMN identifier of the terminal device served by the second access network device, and generates the key based on the PCI and the downlink ARFCN of the determined target cell.

It should be noted that the sixth aspect may be used in combination with another aspect, for example, used in combination with the first aspect. When the first message includes first information, the method provided in the first aspect may be performed. When the first message does not include the first information, the method provided in the sixth aspect may be performed. For another example, when there is no candidate target cell that is in the plurality of candidate target cells and that has a same PLMN as that of the terminal device served by the second access network device, the method provided in the third aspect or the fifth aspect may be performed. When there is a candidate target cell that is in the plurality of candidate target cells and that has a same PLMN as that of the terminal device served by the second access network device, the method provided in the sixth aspect may be performed.

The methods in the first aspect to the sixth aspect are applicable to an RRC resume scenario, or is applicable to an RRC re-establishment scenario.

In some possible implementations of the first aspect, the second aspect, the third aspect, the fourth aspect, and the sixth aspect, the first message may be a retrieve user equipment context request message, and the second message may be a retrieve user equipment context response message.

In some possible implementations of the fifth aspect, the first message may be a retrieve user equipment context request message, and the third message may be a retrieve user equipment context failure message.

According to a seventh aspect, a communication apparatus is provided. The communication apparatus has a function of implementing a corresponding operation in the method according to the first aspect. The function may be implemented by using hardware, or may be implemented by using hardware executing corresponding software. The hardware or software includes one or more modules corresponding to the foregoing function. In a possible design, the communication apparatus includes: a receiving unit, configured to receive a first message from a first access network device, where first information includes PLMN identification information of a target cell of a terminal device served by the first access network device, a CGI of the target cell of the terminal device served by the first access network device, or a first PCI and a first ARFCN, where the first PCI is a physical cell identifier of the target cell of the terminal device served by the first access network device, and the first downlink ARFCN is a downlink ARFCN of the target cell of the terminal device served by the first access network device; a processing unit, configured to generate a key based on the first information or based on the PCI and the downlink ARFCN of the target cell that are determined based on the first information; and a sending unit, configured to send a second message to a second access network, where the second message is for transferring context information of the terminal device, and the second message includes the generated key. These modules may perform corresponding functions in the method example in the first aspect. For details, refer to the detailed descriptions in the method example. Details are not described herein again.

According to an eighth aspect, a communication apparatus is provided. The communication apparatus has a function of implementing a corresponding operation in the method according to the third aspect. The function may be implemented by using hardware, or may be implemented by using hardware executing corresponding software. The hardware or software includes one or more modules corresponding to the foregoing function. In a possible design, the communication apparatus includes: a receiving unit, configured to receive a first message from a first access network device, where the first message includes a first cell identity, and the first cell identity is a unique cell identity that is of a target cell of a terminal device served by the first access network device and that is within a public land mobile network PLMN; a processing unit, configured to determine a plurality of candidate target cells having the first cell identity, and generate a plurality of keys corresponding to the plurality of candidate target cells; and a sending unit, configured to send a second message to a second access network, where the second message is for transferring context information of the terminal device, and the second message includes the plurality of keys and cell information of the candidate target cells respectively corresponding to the plurality of keys. These modules may perform corresponding functions in the method example in the third aspect. For details, refer to the detailed descriptions in the method example. Details are not described herein again.

According to a ninth aspect, a communication apparatus is provided. The communication apparatus has a function of implementing a corresponding operation in the method according to the fifth aspect. The function may be implemented by using hardware, or may be implemented by using hardware executing corresponding software. The hardware or software includes one or more modules corresponding to the foregoing function. In a possible design, the communication apparatus includes: a receiving unit, configured to receive a first message from a first access network device, where the first message includes a first cell identity, and the first cell identity is a unique cell identity that is of a target cell of a terminal device served by the first access network device and that is within a public land mobile network PLMN; a processing unit, configured to determine to reject transfer of context information of the terminal device when there are a plurality of candidate target cells having the first cell identity; and a sending unit, configured to send a third message to a second access network, where the third message indicates that the context information of the terminal device fails to be transferred. These modules may perform corresponding functions in the method example in the fifth aspect. For details, refer to the detailed descriptions in the method example. Details are not described herein again.

According to a tenth aspect, a communication apparatus is provided. The communication apparatus has a function of implementing a corresponding operation in the method according to the sixth aspect. The function may be implemented by using hardware, or may be implemented by using hardware executing corresponding software. The hardware or software includes one or more modules corresponding to the foregoing function. In a possible design, the communication apparatus includes: a receiving unit, configured to receive a first message from a first access network device, where the first message includes a first cell identity, and the first cell identity is a unique cell identity that is of a target cell of a terminal device served by the first access network device and that is within a public land mobile network PLMN; a processing unit, configured to: when determining that there are a plurality of candidate target cells having the first cell identity, generate a key based on a PCI and a downlink ARFCN of a cell that is selected from the plurality of candidate target cells and that has a same PLMN identifier as that of the terminal device served by a second access network device; and a sending unit, configured to send a second message to a second access network, where the second message is for transferring context information of the terminal device, and the second message includes the generated key. These modules may perform corresponding functions in the method example in the sixth aspect. For details, refer to the detailed descriptions in the method example. Details are not described herein again.

According to an eleventh aspect, a communication apparatus is provided. The communication apparatus has a function of implementing a corresponding operation in the method according to the second aspect. The function may be implemented by using hardware, or may be implemented by using hardware executing corresponding software. The hardware or the software includes one or more modules corresponding to the function. In a possible design, the communication apparatus includes: a sending unit, configured to send a first message to a second access network device, where the first message is for requesting to transfer context information of a terminal device, and the first message includes first information, where the first information includes PLMN identification information of a target cell of the terminal device served by a first access network device, a CGI of the target cell of the terminal device served by the first access network device, or a first PCI and a first ARFCN, where the first PCI is a physical cell identifier of the target cell of the terminal device served by the first access network device, and the first downlink ARFCN is a downlink ARFCN of the target cell of the terminal device served by the first access network device; a receiving unit, configured to receive a second message from the second access network device, where the second message is for transferring the context information of the terminal device, the second message includes a key, and the key is generated by the second access network device based on the first information or based on the PCI and the downlink ARFCN of the target cell that are determined based on the first information; and a processing unit, configured to communicate with the terminal device based on the key. These modules may perform corresponding functions in the method example in the second aspect. For details, refer to the detailed descriptions in the method example. Details are not described herein again.

According to a twelfth aspect, a communication apparatus is provided. The communication apparatus has a function of implementing a corresponding operation in the method according to the fourth aspect. The function may be implemented by using hardware, or may be implemented by using hardware executing corresponding software. The hardware or the software includes one or more modules corresponding to the function. In a possible design, the communication apparatus includes: a sending unit, configured to send a first message to a second access network device, where the first message is for requesting to transfer context information of a terminal device, the first message includes a first cell identity, and the first cell identity is a unique cell identity that is of a target cell of the terminal device served by a first access network device and that is within a public land mobile network PLMN; a receiving unit, configured to receive a second message from the second access network device, where the second message is for transferring the context information of the terminal device, the second message includes a plurality of keys and cell information of candidate target cells respectively corresponding to the plurality of keys, and the candidate target cells are cells having the first cell identity; and a processing unit, configured to select a key corresponding to the target cell based on the cell information of the candidate target cells, and communicate with the terminal device based on the selected key. These modules may perform corresponding functions in the method example in the fourth aspect. For details, refer to the detailed descriptions in the method example. Details are not described herein again.

According to a thirteenth aspect, a communication apparatus is provided. The communication apparatus may be a communication apparatus that implements the method in any one of the first aspect to the sixth aspect, or a chip disposed in the communication apparatus that implements the method in any one of the first aspect to the sixth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first access network device or the second access network device in each aspect.

It should be understood that the communication interface may be a transceiver in the communication apparatus, for example, may be implemented by using an antenna, a feeder, a codec, or the like in the communication apparatus. Alternatively, if the communication apparatus is a chip disposed in an access network device, the communication interface may be an input/output interface of the chip, for example, an input/output pin. The transceiver is used by the communication apparatus to communicate with another device.

According to a fourteenth aspect, an embodiment of this application provides a chip system. The chip system includes a processor, configured to implement the communication method in any one of the first aspect to the sixth aspect. In a possible design, the chip system further includes a memory, configured to store program instructions and/or data. The chip system may include a chip, or include a chip and another discrete device.

According to a fifteenth aspect, an embodiment of this application provides a communication system. The system includes a communication apparatus that implements the method according to the first aspect and a communication apparatus that implements the method according to the second aspect, includes a communication apparatus that implements the method according to the third aspect and a communication apparatus that implements the method according to the fourth aspect, includes a communication apparatus that implements the method according to the fifth aspect and a first access network device, or includes a communication apparatus that implements the method according to the sixth aspect and a first access network device.

According to a sixteenth aspect, a computer program product is provided. The computer program product includes computer program code. When the computer program code is run, the method performed by the first access network device in the foregoing aspects is performed, or the method performed by the second access network device in the foregoing aspects is performed.

According to a seventeenth aspect, this application provides a computer-readable storage medium. The computer-readable storage medium stores a computer program. When the computer program is run, the method performed by the first access network device in the foregoing aspects is implemented, or the method performed by the second access network device in the foregoing aspects is implemented.

### BRIEF DESCRIPTION OF DRAWINGS

FIG. 1 is a schematic diagram of an architecture of a communication system to which an embodiment of this application is applied;
FIG. 2 is a flowchart of an example of a communication method according to an embodiment of this application;
FIG. 3 is a flowchart of another example of a communication method according to an embodiment of this application;
FIG. 4 is a flowchart of another example of a communication method according to an embodiment of this application;
FIG. 5 is a flowchart of another example of a communication method according to an embodiment of this application;
FIG. 6 is a flowchart of another example of a communication method according to an embodiment of this application;
FIG. 7 is a flowchart of another example of a communication method according to an embodiment of this application;
FIG. 8 is a schematic diagram of a structure of a communication apparatus according to an embodiment of this application;
FIG. 9 is a schematic diagram of another structure of a communication apparatus according to an embodiment of this application;
FIG. 10 is a schematic diagram of another structure of a communication apparatus according to an embodiment of this application.

### DESCRIPTION OF EMBODIMENTS

In the specification, claims, and accompanying drawings of this application, the terms "first", "second", "third", and the like are intended to distinguish between different objects but do not indicate a particular order. In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

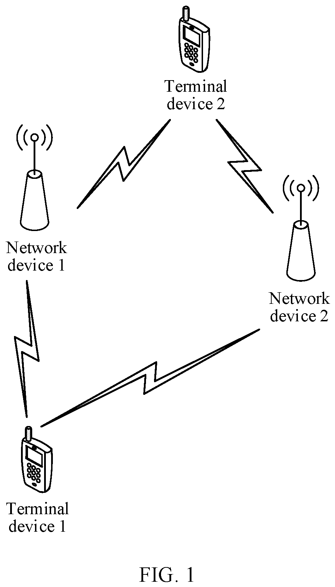

The technical solutions in embodiments of this application described below may be applied to a network architecture shown in FIG. 1. FIG. 1 is merely an example of a communication system. The communication system may include a plurality of terminal devices and a plurality of network devices. In FIG. 1, an example in which two terminal devices and two network devices are included is used. Certainly, a quantity of terminal devices in FIG. 1 is merely an example, and there may be fewer or more terminal devices. Any network device may provide a service for a terminal device within coverage.

The terminal device is a device with a wireless transceiver function, and may be a fixed device, a mobile device, a handheld device, a wearable device, a vehicle-mounted device, or an apparatus (for example, a communication module or a chip system) built in the foregoing device. The terminal device is configured to connect a person, an object, a machine, and the like, and may be widely used in various scenarios. Sometimes, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a pad (pad), a computer with a wireless transceiver function, a virtual reality (virtual reality, VR) terminal device, an augmented reality (augmented reality, AR) terminal device, a wireless terminal in industrial control (industrial control), a wireless terminal in an Internet of Things (Internet of Things, IoT) system, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, another processing device connected to a wireless modem, a vehicle-mounted device, a vehicle-mounted communication apparatus, a vehicle-mounted communication processing chip, a wearable device, a terminal device in a 5G network, a terminal device in a future evolved public land mobile network (public land mobile network, PLMN), or the like. It should be understood that a specific form of the terminal device is not limited in this application.

The network device may be an access network device. The access network device may also be referred to as a radio access network (radio access network, RAN) device, and is a device that communicates with a wireless terminal over an air interface by using one or more sectors in an access network, or may be considered as a device that provides a wireless communication function for a terminal device. The access network device includes, for example, but is not limited to: a next generation NodeB (generation NodeB, gNB) in 5G, an evolved NodeB (evolved NodeB, eNB), a baseband unit (baseband unit, BBU), a transmission reception point (transmission reception point, TRP), a transmission point (transmission point, TP), a base station in a future mobile communication system, an access point in a Wi-Fi system, or the like. Alternatively, the access network device may be a radio controller, a central unit (central unit, CU), and/or a distributed unit (distributed unit, DU) in a cloud radio access network (cloud radio access network, CRAN) scenario. Alternatively, the network device may be a relay station, a vehicle-mounted device, a network device in a future evolved PLMN network, or the like.

The CU and the DU may be physically separated, or may be deployed together. A plurality of DUs may share one CU. One DU may also be connected to a plurality of CUs. The CU and the DU may be connected through an interface, for example, an F 1 interface. The CU and the DU may be divided based on protocol layers of a wireless network. For example, one possible division manner is that the CU is configured to perform functions of a radio resource control (Radio Resource Control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that division of processing functions of the CU and the DU based on the protocol layers is merely an example, and there may be another division manner. For example, the CU or the DU may have functions of more protocol layers through division. For example, the CU or the DU may alternatively have some processing functions of a protocol layer through division. In a design, some functions of the RLC layer and a function of a protocol layer above the RLC layer are set in the CU, and a remaining function of the RLC layer and a function of a protocol layer below the RLC layer are set in the DU. In another design, functions of the CU or the DU may alternatively be divided based on a service type or another system requirement. For example, division is performed based on latency, a function whose processing time needs to meet a latency requirement is set in the DU, and a function whose processing time does not need to meet the latency requirement is set in the CU. The network architecture shown in the foregoing figure may be applied to a 5G communication system, or may share one or more components or resources with an LTE system. In another design, the CU may alternatively have one or more functions of a core network. One or more CUs may be disposed in a centralized manner or a split manner. For example, the CU may be disposed in a network side for ease of centralized management. The DU may have a plurality of radio frequency functions, or the radio frequency function may be set remotely.

The function of the CU may be implemented by one entity or by different entities. For example, the function of the CU may be further divided. For example, a control plane (control panel, CP) and a user plane (user panel, UP) are separated, in other words, a CU control plane (CU-CP) and a CU user plane (CU-UP) are obtained. For example, the CU-CP and the CU-UP may be implemented by different functional entities, and the CU-CP and the CU-UP may be coupled to the DU to jointly complete a function of the access network device.

The terminal device may communicate with access network devices in different technologies. For example, the terminal device may communicate with an access network device that supports long term evolution (long term evolution, LTE), may communicate with an access network device that supports 5G, or may communicate with both an access network device that supports LTE and an access network device that supports 5G. This is not limited in embodiments of this application.

For ease of understanding this application, related concepts in embodiments of this application are described below.

A cell has a plurality of cell identities corresponding to different cell identity types, and the cell identities are used in different ranges. For example, at a physical layer, a physical cell identifier (Physical Cell Identifier, PCI) is usually used on a radio air interface. A cell identity (CellIdentity) uniquely identifies a cell in a public land mobile network (Public Land Mobile Network, PLMN), and is generally 28 bits. A cell global identifier (Cell Global Identity, CGI) or a global cell identity (Global Cell Identity, GCI) uniquely identifies a cell globally. For ease of description, the CGI is uniformly used for description below in this application. In an implementation, the CGI includes a PLMN identifier (PLMN ID) and a CellIdentity.

In a network sharing scenario, a cell (for example, a cell A) may be shared by a plurality of operators. Corresponding to each operator, or corresponding to each PLMN ID, the cell A corresponds to one CellIdentity. It may be understood that CellIdentities of a same cell in case of different PLMN IDs may be the same or different, and CellIdentities of the cell A in case of the foregoing plurality of operators may be the same or different. However, a PCI and a downlink absolute radio frequency channel number (Absolute Radio Frequency Channel Number, ARFCN) of the cell A are the same for each PLMN ID. To be specific, in the network sharing scenario, a PCI and a downlink ARFCN of a cell are unchanged in case of different PLMN IDs. Generally, for a terminal device that accesses a shared cell, there is one serving PLMN. This is not limited in embodiments of this application. Table 1 is an example of a configured cell identity in the network sharing scenario.

**Table 1**

| Cell 1 | Operator (PLMN ID) | Cell identity (CellIdentity) | PCI | Downlink ARFCN |
|---|---|---|---|---|
| | PLMN 1 | 1 | 10 | 100 |
| | PLMN 2 | 2 | 10 | 100 |
| Cell 2 | PLMN 1 | 2 | 20 | 200 |

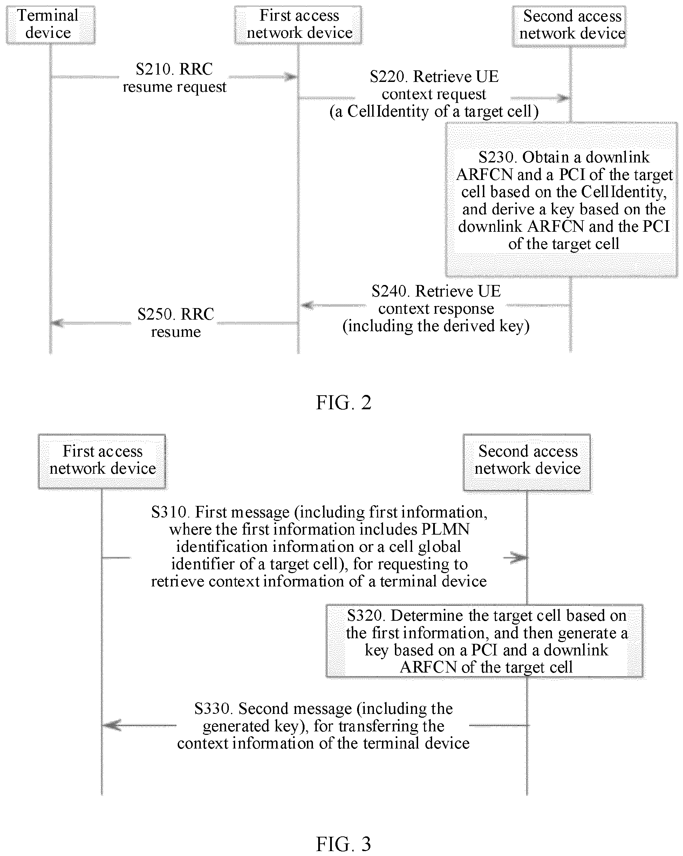

FIG. 2 shows an example of an RRC connection resume procedure.

S210. A terminal device sends an RRC resume request (RRC Resume Request) message to a first access network device.

When a terminal device in an RRC inactive (inactive) state needs to enter a connected state, an RRC resume request is sent to the first access network device via a current serving cell of the terminal device. The first access network device herein is a current serving base station of the terminal device, or is also referred to as a target base station. The current serving cell herein may also be referred to as a target cell in an RRC connection resume process. The terminal device generates a new key based on a downlink ARFCN and a PCI of the current serving cell. It should be noted that, in a process of synchronizing with the current serving cell, the terminal device obtains the downlink ARFCN and the PCI of the current serving cell. For a specific obtaining method, refer to a conventional technology. Details are not described herein.

S220. The first access network device sends a retrieve context request (RETRIEVE UE CONTEXT REQUEST) message to a second access network device, where the message carries a cell identity of a target cell.

The cell identity is a unique CellIdentity within a PLMN. The target cell herein is the current serving cell in step S210.

After receiving the RRC resume request message of the terminal device, the first access network device finds a source base station of the terminal device based on information carried in the RRC resume request message, namely, a base station that stores a context of the terminal device. For a specific method, refer to a conventional technology. Details are not described herein. It may be understood that the source base station may also be referred to as an anchor base station. In this embodiment of this application, an access network device such as the source base station is referred to as the second access network device. Then, the first access network device sends the retrieve context request message to the second access network device.

S230. The second access network device obtains the downlink ARFCN and the PCI of the target cell based on the CellIdentity, and generates a key based on the downlink ARFCN and the PCI of the target cell.

When establishing an interface (for example, an X2 interface or an Xn interface) between base stations, two access network devices exchange cell information of each cell of the two respective access network devices with each other. The cell information includes at least a PLMN ID of the cell, a CellIdentity of the cell, and a PCI and a downlink ARFCN of the cell. Each access network device stores the cell information of each cell of the other access network device. Certainly, the cell information may also be updated subsequently through an update process between the base stations. In addition to storing cell information of each cell served by the first access network device, the second access network device further stores at least cell information of each cell of another access network device that establishes an inter-base station interface with the second access network device. It should be noted that the stored information also includes an association relationship between a cell and an access network device, that is, includes information indicating an access network device to which a cell belongs. After obtaining the context of the terminal device, the second access network device further uniquely determines the target cell and the downlink ARFCN and the PCI of the target cell based on the CellIdentity of the target cell and the cell information that is of each cell served by the first access network device and that is stored by the second access network device. The second access network device uses the downlink ARFCN and the PCI of the target cell as parameters to generate the key. It should be noted that for a process of generating the key based on the ARFCN and the PCI, refer to a conventional technology. Details are not described and limited in this embodiment of this application.

S240. The second access network device sends a retrieve context response (RETRIEVE UE CONTEXT RESPONSE) message to the first access network device.

In addition to context information of the terminal device, the message further carries the key generated in step S230. The first access network device subsequently communicates with the terminal device by using the key.

S250. The first access network device sends an RRC resume (RRC Resume) message to the terminal device.

The second access network device uses the downlink ARFCN and the PCI of the target cell as the parameters to generate the key, and sends the generated key to the first access network device. The terminal device also uses the same parameters to generate a key, so that the terminal device and the first access network device use the same key to perform communication. It should be noted that the key generated by the terminal device needs be consistent with the key generated by the second access network device. Otherwise, the terminal device cannot communicate with the first access network device. However, the inventor of this application finds that, in a network sharing scenario, the first access network device may have a plurality of cells that have a same CellIdentity but different PLMN IDs. To be specific, the cell information that is of the first access network device and that is stored by the second access network device includes the same CellIdentity of a plurality of cells. If the target cell is one of the plurality of cells, the second access network device cannot uniquely determine the target cell based on the CellIdentity in step S230, and therefore cannot obtain the downlink ARFCN and the PCI of the target cell. In other words, the second access network device obtains an incorrect downlink ARFCN and an incorrect PCI, and then generates an incorrect key. This causes a failure in subsequent RRC resume. Table 1 is used as an example. If a cell 1 and a cell 2 are cells served by the first access network device, and the target cell is the cell 2, the CellIdentity sent by the first access network device to the second access network device is 2. Because a CellIdentity of the cell 1 corresponding to a PLMN 2 is also 2, the second access network device cannot determine whether the target cell is the cell 1 or the cell 2 based on information of the CellIdentity (2). If the second access network device mistakenly considers the target cell as the cell 1, the second access network device generates a key by using a PCI (10), and sends the key to the first access network device. The first access network device uses the key generated by using the PCI (10), and the terminal device uses a key generated by using a PCI (20). As a result, the keys used by the first access network device and the terminal device are inconsistent. This causes a failure in subsequent RRC resume.

It should be noted that, in a re-establishment scenario, to be specific, if the "RRC resume request message" in step S210 is replaced with an "RRC re-establishment request message", and the "RRC resume message" in step S250 is replaced with an "RRC re-establishment message", the foregoing problem of key inconsistency also exists. This causes a failure in RRC re-establishment.

In view of this, the technical solutions in embodiments of this application are provided. The technical solutions provided in embodiments of this application are described below in detail with reference to the accompanying drawings.

An embodiment of this application provides a communication method. FIG. 3 is a flowchart of the method. In the following description process, an example in which the method is applied to the communication system shown in FIG. 1 is used. In addition, the method may be performed by two communication apparatuses. The two communication apparatuses are, for example, a first access network device and a second access network device. The first access network device and the second access network device each may be a base station or a communication apparatus that can support the base station in implementing a function required by the method.

For ease of description, in the following descriptions, the first access network device may be a target access network device, or a current serving access network device, of a terminal device in an RRC resume process or an RRC re-establishment process. The second access network device may be a source access network device, or an anchor access network device, of the terminal device in the RRC resume process or the RRC re-establishment process.

For example, in an RRC resume scenario, the terminal device enters an RRC inactive state from an RRC connected state in a coverage area of the second access network device. As the terminal device moves, the terminal device enters a coverage area of the first access network device, and the terminal device needs to enter the RRC connected state. For example, if data needs to be sent, the terminal device initiates an RRC resume process in the coverage area of the first access network device. In an RRC re-establishment scenario, if a radio link failure, an integrity check failure, or the like occurs in the terminal device served by the second access network device, the terminal device selects the first access network device to initiate an RRC re-establishment process.

S310. The first access network device sends a first message to the second access network device, to request to retrieve context information of the terminal device.

Correspondingly, the second access network device receives the first message. The first message includes first information. The first information includes PLMN identification information of a target cell or a CGI of the target cell.

In the RRC resume scenario, the terminal device camps on the target cell, and the target cell is a cell served by the first access network device. The terminal device sends an RRC resume request message to the first access network device in the target cell. After the first access network device receives the RRC resume request message, the first access network device identifies that the context information of the terminal device is stored in the second access network device, or identifies that an anchor access network device of the terminal device is the second access network device, and then performs step S310.

In the RRC re-establishment scenario, if the radio link failure, the integrity check failure, or the like occurs in the terminal device served by the second access network device, the terminal device performs a cell selection process to select the target cell served by the first access network device, and sends an RRC re-establishment request message to the first access network device in the target cell. After the first access network device receives the RRC re-establishment request message, the first access network device identifies that the context information of the terminal device is stored in the second access network device, or identifies that a source access network device is the second access network device, and then performs step S310.

In a possible implementation, the first information includes the PLMN identification information of the target cell. In a network sharing scenario, there may be a plurality of cells having one CellIdentity, but the plurality of cells have different PLMN identifiers. A CellIdentity of the target cell included in the first message and the PLMN identification information of the target cell may uniquely identify the target cell. The PLMN identification information is for identifying a PLMN network, may include a mobile network code, and optionally, may further include a mobile country code.

In another possible implementation, the first information includes the CGI of the target cell. The CGI of the target cell may uniquely identify the target cell. Optionally, if backward compatibility is considered, a CellIdentity included in the first message may be considered as an existing information element. In this implementation, a complete CGI information element is newly added to the first message. The CellIdentity in the first message and the CGI are two independent information elements, although the CGI information element further includes another CellIdentity with a same value.

The first message may be a retrieve UE context request (RETRIEVE UE CONTEXT REQUEST) message between base stations.

S320. The second access network device determines the target cell based on the first information, and then generates a key based on a PCI and a downlink ARFCN of the target cell.

If in step S310, the first information includes the PLMN identification information of the target cell, the second access network device uniquely determines the target cell based on the PLMN identification information of the target cell, the CellIdentity of the target cell included in the first message, and cell information that is of each cell served by the first access network device and that is stored by the second access network device, obtains the PCI and the downlink ARFCN of the target cell, and generates the key based on the PCI and the downlink ARFCN of the target cell. Table 1 is used as an example. If the target cell is a cell 2, the first information includes PLMN identification information of the cell 2, namely, PLMN 1, and the first message further includes a CellIdentity (2). The second network access device determines, based on a PLMN ID (PLMN 1) and the CellIdentity (2), that the target cell is the cell 2 instead of a cell 1, and further obtains a PCI (20) and a downlink ARFCN (200) of the cell 2. Then, the key is generated based on the PCI (20) and the downlink ARFCN (200) of the cell 2.

If in step S310, the first information includes the CGI of the target cell, the second access network device may uniquely determine the target cell based on the CGI of the target cell, and cell information that is of each cell served by the first access network device and that is stored by the second access network device, obtain the PCI and the downlink ARFCN of the target cell, and generate the key based on the PCI and the downlink ARFCN of the target cell. Table 1 is used as an example. If the target cell is a cell 2, the first information includes CGI of the cell 2, namely, a PLMN ID (PLMN 1) and a CellIdentity (2). The second network access device determines, based on the CGI, that the target cell is the cell 2 instead of a cell 1, and further obtains a PCI (20) and a downlink ARFCN (200) of the cell 2. Then, the key is generated based on the PCI (20) and the downlink ARFCN (200) of the cell 2.

It should be noted that, that the second access network device determines the target cell based on the first information, and then generates the key based on the PCI and the downlink ARFCN of the target cell may also be considered as that the second access network device generates the key based on the first information.

In this step, because the second access network device can uniquely identify the target cell based on the first information, to ensure that the key generated by the second access network device is consistent with a key generated by the terminal device. Subsequently, the second access network device sends the generated key to the first access network device, and the first access network device communicates with the terminal device by using the key, to ensure that the key used by the first access network device is consistent with the key used by the terminal device. This avoids a failure caused by key inconsistency in the RRC resume process or the RRC re-establishment process.

S330. The second access network device sends a second message to the first access network device, to transfer the context information of the terminal device to the first access network device.

Correspondingly, the first access network device receives the second message. The second message includes the key generated in step S320.

The second message may be a retrieve UE context response (RETRIEVE UE CONTEXT RESPONSE) message between base stations.

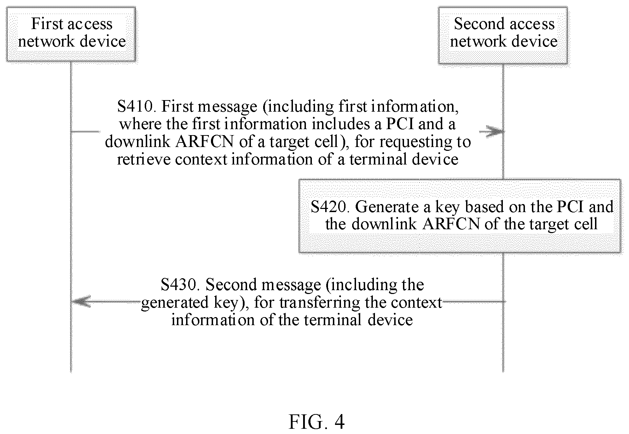

Another embodiment of this application provides a communication method. FIG. 4 is a flowchart of the method. In the following description process, an example in which the method is applied to the communication system shown in FIG. 1 is used. In addition, the method may be performed by two communication apparatuses. The two communication apparatuses are, for example, a first access network device and a second access network device. The first access network device and the second access network device each may be a base station or a communication apparatus that can support the base station in implementing a function required by the method.

This embodiment is applicable to an RRC resume scenario or an RRC re-establishment scenario. For details, refer to the corresponding descriptions of the embodiment shown in FIG. 3. Details are not described in this embodiment again.

S410. The first access network device sends a first message to the second access network device, to request to retrieve context information of a terminal device.

Correspondingly, the second access network device receives the first message. The first message includes first information. The first information includes a first PCI and a first downlink ARFCN, where the first PCI is a physical cell identifier of a target cell of the terminal device served by the first access network device, and the first downlink ARFCN is a downlink ARFCN of the target cell of the terminal device served by the first access network device.

It may be understood that an implementation of S410 is similar to that of S310, except that content included in the first information is different. For the related implementation of S410, further refer to the corresponding descriptions in the embodiment shown in FIG. 3. Details are not described in this embodiment again.

S420. The second access network device generates a key based on the PCI and the downlink ARFCN of the target cell.

In a possible implementation, the second access network device may not need to uniquely determine the target cell, but directly generate the key by using the received PCI and the received downlink ARFCN of the target cell as parameters. According to the method, implementation complexity of the second access network is low. Table 1 is used as an example. If the target cell is a cell 2, the first information includes a PCI (20) and a downlink ARFCN (200) of the cell 2, and then the key is directly generated based on the received PCI (20) and the received downlink ARFCN (200).

In another possible implementation, the second access network device may first uniquely determine the target cell based on a CellIdentity, the PCI, and the downlink ARFCN that are of the target cell and that are included in the first message, and then generate the key by using the PCI and the downlink ARFCN of the determined target cell as the parameters. Table 1 is used as an example. If the target cell is a cell 2, the first information includes a PCI (20) and a downlink ARFCN (200) of the cell 2, and the first message further includes a CellIdentity (2). It is determined, based on the CellIdentity (2), the PCI (20), and the downlink ARFCN (200), that the target cell is the cell 2 instead of a cell 1, and the PCI (20) and the downlink ARFCN (200) of the cell 2 are obtained. Then, the key is generated based on the PCI (20) and downlink ARFCN (200).

In this step, because the second access network device can obtain the PCI and the downlink ARFCN of the correct target cell, to ensure that the key generated by the second access network device is consistent with a key generated by the terminal device. Subsequently, the second access network device sends the generated key to the first access network device, and the first access network device communicates with the terminal device by using the key, to ensure that the key used by the first access network device is consistent with the key used by the terminal device. This avoids a failure caused by key inconsistency in an RRC resume process or an RRC re-establishment process.

S430. The second access network device sends a second message to the first access network device, to transfer the context information of the terminal device to the first access network device.

Correspondingly, the first access network device receives the second message. The second message includes the key generated in step S420.

It may be understood that an implementation of S430 is similar to that of S330. For related content, further refer to the corresponding descriptions in the embodiment shown in FIG. 3. Details are not described in this embodiment again.

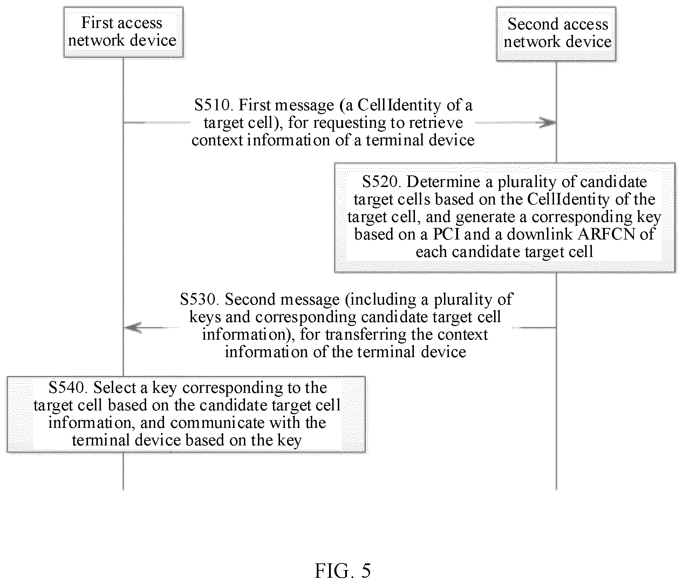

Another embodiment of this application provides a communication method. FIG. 5 is a flowchart of the method. In the following description process, an example in which the method is applied to the communication system shown in FIG. 1 is used. In addition, the method may be performed by two communication apparatuses. The two communication apparatuses are, for example, a first access network device and a second access network device. The first access network device and the second access network device each may be a base station or a communication apparatus that can support the base station in implementing a function required by the method.

This embodiment is applicable to an RRC resume scenario or an RRC re-establishment scenario. For details, refer to the corresponding descriptions of the embodiment shown in FIG. 3. Details are not described in this embodiment again.

S510. The first access network device sends a first message to the second access network device, to request to retrieve context information of a terminal device.

Correspondingly, the second access network device receives the first message. The first message includes a first cell identity, where the first cell identity is a unique cell identity that is of a target cell of the terminal device served by the first access network device and that is within a PLMN, namely, the CellIdentity of the target cell. The first message may be a retrieve UE context request (RETRIEVE UE CONTEXT REQUEST) message between base stations.

It may be understood that step S510 may be performed in the RRC resume scenario or the RRC re-establishment scenario. For details, refer to the corresponding descriptions in the embodiment shown in FIG. 3. Details are not described in this embodiment again.

S520. The second access network device determines at least one candidate target cell based on the CellIdentity of the target cell, and generates a corresponding key based on a PCI and a downlink ARFCN of each candidate target cell.

In a network sharing scenario, the second access network device may identify one or more candidate target cells based on the received CellIdentity of the target cell. To be specific, a CellIdentity of the one or more candidate target cells is the same as the received CellIdentity of the target cell. When there are a plurality of candidate target cells, each of the plurality of candidate target cells has a different PLMN identifier.

Optionally, when the candidate target cells are identified, it may be determined that the candidate target cells need to be cells served by the first access network device, to be specific, the candidate target cells are cells that are served by the first access network device and that have the first cell identity. If a cell is not served by the first access network device, even if a CellIdentity of the cell is the same as the received CellIdentity of the target cell, the second access network device does not consider the cell as a candidate target cell. In this way, a quantity of candidate target cells can be reduced, so that calculation overheads for generating the key and signaling overheads for sending a second message in subsequent step S530 can be reduced. Certainly, it may not be determined that the candidate cell needs to be a cell served by the first access network device. In this way, processing can be simpler.

The second access network device generates a corresponding key based on the PCI and the downlink ARFCN of each candidate target cell. Table 1 is used as an example. If the target cell is a cell 2, the first message includes a CellIdentity (2) of the target cell. Based on the CellIdentity of the target cell, the second access network device identifies that two candidate target cells served by the first access network device have the CellIdentity (2), namely, a cell 1 and the cell 2. Then, the second access network device generates a key 1 corresponding to the cell 1 by using a PCI (10) and a downlink ARFCN (100) of the cell 1, and generates a key 2 corresponding to the cell 2 by using a PCI (20) and a downlink ARFCN (200) of the cell 2.

S530. The second access network device sends a second message to the first access network device, to transfer the context information of the terminal device to the first access network device.

Correspondingly, the first access network device receives the second message. The second message includes the at least one key generated in step S520 and cell information of the candidate target cell corresponding to each key.

Each key corresponds to cell information of one candidate target cell. The cell information of the candidate target cell is for identifying or distinguishing different candidate target cells, or can be combined with the CellIdentity in the first message to identify or distinguish different candidate target cells. The cell information of the candidate target cell may include PLMN identification information of the candidate target cell, a PCI and a downlink ARFCN of the candidate target cell, or a CGI of the candidate target cell. For example, the cell information of the candidate target cell includes the PLMN identification information of the candidate target cell. In the example of S520, the second message includes {key 1, PLMN 2} corresponding to the cell 1, and {key 2, PLMN 1} corresponding to the cell 2. A combination of PLMN 2 and the CellIdentity in the first message may be for identifying the cell 1, and a combination of PLMN 1 and the CellIdentity in the first message may be for identifying the cell 2.

Considering that the second message already has a first information element corresponding to a key, the first information element may include key information of a first candidate cell, and the second message further includes a second information element for indicating cell information of the first candidate target cell. In addition, the second message may further include a list. The list is for all other candidate target cells than the first candidate target cell. Each element in the list corresponds to one key and cell information of a candidate target cell corresponding to the key. It may be understood that the list may include one or more elements. The first candidate target cell may be any candidate target cell, may be a candidate target cell that has a same PLMN identifier as that of the terminal device served by the second access network device, or may be a candidate target cell that the second access network device considers most likely to be the target cell.

In another possible implementation, the second message may include a list. The list is for all candidate target cells, and each element in the list corresponds to one key and cell information of a candidate target cell corresponding to the key.

The second message may be a retrieve UE context response (RETRIEVE UE CONTEXT RESPONSE) message between base stations.

S540. The first access network device selects a key corresponding to the target cell based on the cell information of the candidate target cells, and communicates with the terminal device based on the key.

The first access network device may select, based on cell information of the target cell and the received cell information of the candidate target cells, a key corresponding to cell information of a candidate target cell that is consistent with the cell information of the target cell.

For example, in the example of S530, the second access network device selects a key corresponding to a PLMN identifier (namely, PLMN 1) of the cell 2, namely, the key 2, as a key for communication with the terminal device.

In this embodiment, the first access network device selects the key corresponding to the target cell based on the cell information of the candidate target cells, to ensure that the key used by the first access network device is consistent with a key used by the terminal device. This avoids a failure caused by key inconsistency in an RRC resume process or an RRC re-establishment process.

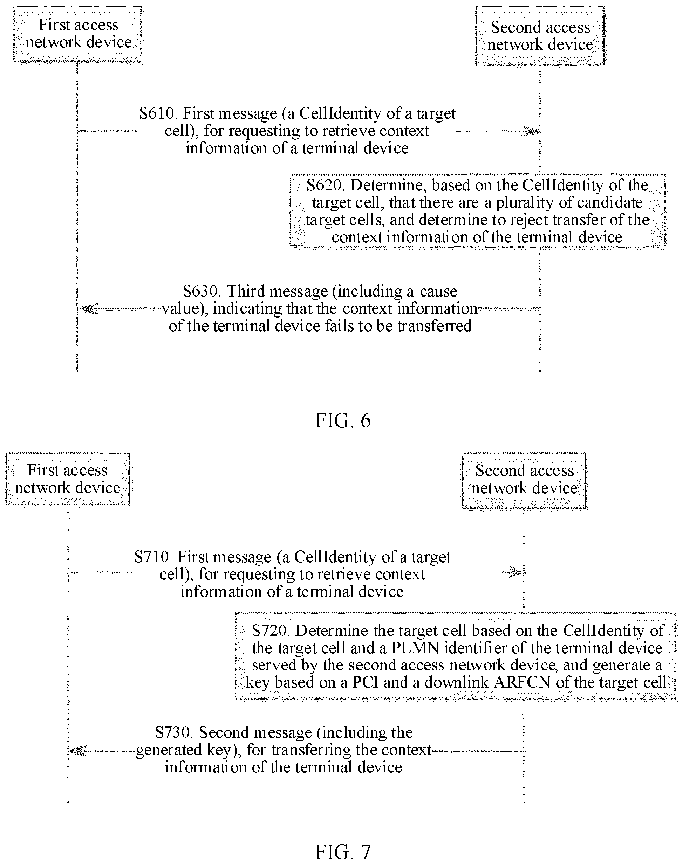

Another embodiment of this application provides a communication method. FIG. 6 is a flowchart of the method. In the following description process, an example in which the method is applied to the communication system shown in FIG. 1 is used. In addition, the method may be performed by two communication apparatuses. The two communication apparatuses are, for example, a first access network device and a second access network device. The first access network device and the second access network device each may be a base station or a communication apparatus that can support the base station in implementing a function required by the method.

This embodiment is applicable to an RRC resume scenario or an RRC re-establishment scenario. For details, refer to the corresponding descriptions of the embodiment shown in FIG. 3. Details are not described in this embodiment again.

S610. The first access network device sends a first message to the second access network device, to request to retrieve context information of a terminal device.

Correspondingly, the second access network device receives the first message. The first message includes a first cell identity, where the first cell identity is a unique cell identity that is of a target cell of the terminal device served by the first access network device and that is within a PLMN, namely, the CellIdentity of the target cell. The first message may be a retrieve UE context request (RETRIEVE UE CONTEXT REQUEST) message between base stations.

It may be understood that step S610 may be performed in the RRC resume scenario or the RRC re-establishment scenario. For details, refer to the corresponding descriptions in the embodiment shown in FIG. 3. Details are not described in this embodiment again.

S620. The second access network device determines, based on the CellIdentity of the target cell, that there are a plurality of candidate target cells, and rejects transfer of the context information of the terminal device.

In a network sharing scenario, if the second access network device determines that there are a plurality of candidate target cells having the CellIdentity, the second access network device cannot determine a real target cell in the plurality of candidate target cells. In this embodiment, the second access network device may reject transfer of a context of the terminal device. Compared with selecting an incorrect target cell to generate a key until a subsequent failure is caused by key inconsistency, data transmission of the terminal device can be resumed more quickly by rejecting transfer of the context of the terminal device. This reduces a delay and signaling overheads.

Optionally, it may be determined that the candidate target cells need to be cells served by the first access network device. If a cell is not served by the first access network device, even if a CellIdentity of the cell is the same as the received CellIdentity of the target cell, the second access network device does not consider the cell as a candidate target cell. An advantage of this practice is that a quantity of candidate target cells may be reduced. When the quantity of candidate target cells is reduced to 1, in this embodiment, a failure in transferring the context information of the terminal device can be avoided, and a failure in an RRC resume process or a re-establishment process can be further avoided.

Table 1 is used as an example. If the target cell is a cell 2, the first message includes a CellIdentity (2) of the target cell. Based on the CellIdentity of the target cell, the second access network device identifies that two candidate target cells served by the first access network device have the CellIdentity (2), namely, a cell 1 and the cell 2. The second access network device cannot determine whether the target cell is the cell 1 or the cell 2, and the second access network device rejects transfer of the context information of the terminal device.

S630. The second access network device sends a third message to the first access network device, to indicate that the context information of the terminal device fails to be transferred.

Correspondingly, the first access network device receives the third message.

Optionally, the third message includes a cause value, and the cause value may indicate that a failure cause is that there are a plurality of candidate target cells, the target cell cannot be determined, a key cannot be generated, or the like.

The third message may be a retrieve UE context failure (RETRIEVE UE CONTEXT FAILURE) message between base stations.

After receiving the third message, the first access network device may send an RRC re-establishment rejection to the terminal device in the RRC re-establishment scenario, or may send an RRC resume rejection to the terminal device in the RRC resume scenario. Alternatively, regardless of the scenario, the first access network device may send an RRC establishment message to the terminal device, to directly fall back from the RRC resume process or the RRC re-establishment process to an RRC establishment process, so that data transmission of the terminal device can be resumed more quickly, and transmission interruption time of user data of the terminal device can be reduced.

Another embodiment of this application provides a communication method. FIG. 7 is a flowchart of the method. In the following description process, an example in which the method is applied to the communication system shown in FIG. 1 is used. In addition, the method may be performed by two communication apparatuses. The two communication apparatuses are, for example, a first access network device and a second access network device. The first access network device and the second access network device each may be a base station or a communication apparatus that can support the base station in implementing a function required by the method.

This embodiment is applicable to an RRC resume scenario or an RRC re-establishment scenario. For details, refer to the corresponding descriptions of the embodiment shown in FIG. 3. Details are not described in this embodiment again.

S710. The first access network device sends a first message to the second access network device, to request to retrieve context information of a terminal device.

Correspondingly, the second access network device receives the first message. The first message includes a first cell identity, where the first cell identity is a unique cell identity that is of a target cell of the terminal device served by the first access network device and that is within a PLMN, namely, the CellIdentity of the target cell. The first message may be a retrieve UE context request (RETRIEVE UE CONTEXT REQUEST) message between base stations.

It may be understood that step S710 may be performed in the RRC resume scenario or the RRC re-establishment scenario. For details, refer to the corresponding descriptions in the embodiment shown in FIG. 3. Details are not described in this embodiment again.

S720. The second access network device determines the target cell based on the CellIdentity of the target cell and a PLMN identifier of the terminal device served by the second access network device, and generates a key by using a PCI and a downlink ARFCN of the target cell.

In a possible implementation, the second access network device first identifies a candidate target cell based on the received CellIdentity of the target cell. In a network sharing scenario, the second access network device may identify one or more candidate target cells. To be specific, a CellIdentity of the one or more candidate target cells is the same as the received CellIdentity of the target cell, but each of the plurality of candidate target cells has a different PLMN identifier.

The second access network device stores the context information of the terminal device. The context information includes the PLMN identifier of the terminal device served by the second access network device, or an identifier of a serving PLMN of the terminal device or an identifier of a selected PLMN when the second access network device provides a service for the terminal device. Generally, the terminal device does not change a PLMN. To be specific, a PLMN of the terminal device served by the first access network device is the same as a PLMN of the terminal device served by the second access network device. Therefore, in this embodiment, if a plurality of candidate target cells are identified, the second access network device may select, as the target cell, a candidate target cell that has a same PLMN identifier as that of the terminal device served by the second access network device, and then generate the key based on the PCI and the ARFCN of the target cell. In this way, a correctness rate of the generated key can be improved, so that a failure rate caused by key inconsistency in an RRC resume process or an RRC re-establishment process is reduced.

Optionally, if there is no candidate target cell that is in the plurality of candidate target cells and that has a same PLMN as that of the terminal device served by the second access network device, the method may be performed according to the embodiment corresponding to FIG. 5. To be specific, a key is generated based on a PCI and a downlink ARFCN of each candidate target cell, and the plurality of keys and cell information of the corresponding candidate target cells are sent to the first access network device. Alternatively, step S730 is not performed, but the method may be performed according to the embodiment corresponding to FIG. 6. To be specific, the second access network device rejects transfer of the context information of the terminal device, and sends a third message to the first access network device. Table 1 is used as an example. If the first message includes a CellIdentity (2) of the target cell. Based on the CellIdentity of the target cell, the second access network device identifies that two candidate target cells served by the first access network device have the CellIdentity (2), namely, a cell 1 and a cell 2. If the PLMN of the terminal device served by the second access network device is a PLMN 1, the second access network device selects a PCI and a downlink ARFCN of the cell 2 to generate the key. If the PLMN of the terminal device served by the second access network device is a PLMN 2, the second access network device selects a PCI and a downlink ARFCN of the cell 1 to generate the key.

Optionally, if only one candidate target cell is identified, the key is directly generated by using a PCI and an ARFCN of the candidate target cell. To be specific, whether a PLMN identifier of the candidate target cell is the same as the PLMN identifier of the terminal device served by the second access network device does not need to be checked.

In another possible implementation, the second access network device determines the target cell based on the received CellIdentity of the target cell and the PLMN identifier of the terminal device served by the second access network device. To be specific, a cell determined by the second access network device as the target cell needs to meet two conditions: One is that a CellIdentity of the cell is the same as the received CellIdentity of the target cell, and the other is that a PLMN identifier of the cell is the same as the PLMN identifier of the terminal device served by the second access network device. If there is a cell that meets the foregoing condition, the cell is determined as the target cell. To be specific, the second access network device determines that a cell that has the received CellIdentity of the target cell and the PLMN identifier of the terminal device served by the second access network device is the target cell. Then, the second access network device generates the key based on a PCI and a downlink ARFCN of the target cell. Optionally, it may be further determined that the target cell meets a condition that the target cell is a cell served by the first access network device. To be specific, the second access network device determines, as the target cell, a cell that is of the first access network device and that has the received CellIdentity of the target cell and the PLMN identifier of the terminal device served by the second access network device, so that the target cell can be determined more accurately. Generally, the terminal device does not change the PLMN. To be specific, generally, the PLMN of the terminal device served by the first access network device is the same as that of the terminal device served by the second access network device. Therefore, in this way, a correctness rate of the generated key can be improved, so that a failure rate caused by key inconsistency in an RRC resume process or an RRC re-establishment process is reduced. If there is no cell that meets the foregoing condition, the method may be performed according to the embodiment corresponding to FIG. 5. To be specific, the key is generated based on the PCI and the downlink ARFCN of each candidate target cell, and the plurality of keys and the cell information of the corresponding candidate target cell are sent to the first access network device. Alternatively, step S730 is not performed, but the method may be performed according to the embodiment corresponding to FIG. 6. To be specific, the second access network device rejects transfer of the context information of the terminal device, and sends the third message to the first access network device.

S730. The second access network device sends a second message to the first access network device, to transfer the context information of the terminal device to the first access network device.

Correspondingly, the first access network device receives the second message. The second message includes the key generated in step S720.

The second message may be a retrieve UE context response (RETRIEVE UE CONTEXT RESPONSE) message between base stations.

It may be understood that the embodiments corresponding to FIG. 3 to FIG. 7 may be implemented independently, or may be used in combination with each other. For example, when the first message includes the first information, the method may be performed based on the related descriptions of the embodiments corresponding to FIG. 3 or FIG. 4. When the first message does not include the first information, the method may be performed based on the related descriptions of any one of the embodiments in FIG. 5 to FIG. 7. For another example, when the first message does not include the first information and there is no candidate target cell that is in the plurality of candidate target cells and that has a same PLMN as that of the terminal device served by the second access network device, the method may be performed based on the related descriptions of the embodiment corresponding to FIG. 5 or FIG. 6. When there is a candidate target cell that is in the plurality of candidate target cells and that has a same PLMN as that of the terminal device served by the second access network device, the method may be performed based on the related descriptions of the embodiment corresponding to FIG. 7.

With reference to the accompanying drawings, the following describes apparatuses configured to implement the foregoing methods in embodiments of this application. Therefore, all the foregoing content may be used in the following embodiments. Repeated content is not described again.

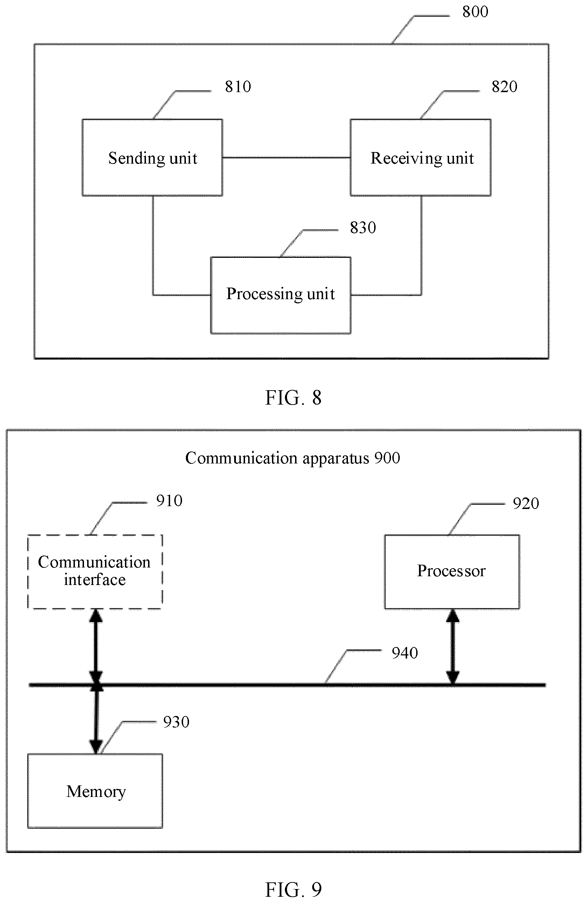

FIG. 8 is a schematic block diagram of a communication apparatus 800 according to an embodiment of this application. The communication apparatus 800 may correspondingly implement functions or steps implemented by a first access network device or a second access network device in the foregoing method embodiments.

In some possible implementations, the communication apparatus may include one or more of a sending unit 810, a receiving unit 820, and a processing unit 830. Optionally, the communication apparatus may further include a storage unit. The storage unit may be configured to store instructions (code or a program) and/or data. The sending unit 810, the receiving unit 820, and the processing unit 830 may be coupled to the storage unit. For example, the processing unit 830 may read the instructions (the code or the program) and/or the data in the storage unit, to implement a corresponding method. The foregoing units may be independently disposed, or may be partially or completely integrated.

In some possible implementations, the communication apparatus 800 can correspondingly implement a corresponding operation and a function of the first access network device in the foregoing method embodiments. For example, the communication apparatus 800 may be a first access network device, or may be a component (such as, a chip or a circuit) used in the first access network device. The sending unit 810 and the receiving unit 820 may be configured to perform all receiving or sending operations performed by the first access network device in the foregoing method embodiments, and/or another process for supporting the technology described in this specification. The processing unit 830 is configured to perform all operations performed by the first access network device in the foregoing method embodiments except the sending and receiving operations, and/or another process for supporting the technology described in this specification.

In some embodiments, the sending unit 810 is configured to send a first message to a second access network device, where the first message is for requesting to transfer context information of a terminal device, and the first message includes first information. The first information includes PLMN identification information of a target cell of the terminal device served by the first access network device, a CGI of the target cell of the terminal device served by the first access network device, or a first PCI and a first ARFCN. The first PCI is a physical cell identifier of the target cell of the terminal device served by the first access network device, and the first downlink ARFCN is a downlink ARFCN of the target cell of the terminal device served by the first access network device. The receiving unit 820 is configured to receive a second message from the second access network device, where the second message is for transferring the context information of the terminal device, and the second message includes a key. The key is generated by the second access network device based on the first information or based on the PCI and the downlink ARFCN of the target cell that are determined based on the first information. The processing unit 830 is configured to communicate with the terminal device based on the key in the second message. For details, refer to FIG. 3, FIG. 4, and the descriptions of the corresponding method embodiments. Details are not described herein again.

In some other embodiments, the sending unit 810 is configured to send a first message to a second access network device, where the first message is for requesting to transfer context information of a terminal device, and the first message includes a first cell identity. The first cell identity is a unique cell identity that is of a target cell of the terminal device served by the first access network device and that is within a public land mobile network PLMN. The receiving unit 820 is configured to receive a second message from the second access network device, where the second message is for transferring the context information of the terminal device, and the second message includes a plurality of keys and cell information of candidate target cells respectively corresponding to the plurality of keys. The candidate target cells are cells having the first cell identity. The processing unit 830 is configured to select a key corresponding to the target cell based on the cell information of the candidate target cells, and communicate with the terminal device based on the selected key. For details, refer to FIG. 5 and the descriptions of the corresponding method embodiment. Details are not described herein again.

It should be understood that the processing unit 830 in this embodiment of this application may be implemented by at least one processor or a processor-related circuit component. The sending unit 810 and the receiving unit 820 may be implemented by a transceiver, a transceiver-related circuit component, or a communication interface.

In some possible implementations, the communication apparatus 800 can correspondingly implement a corresponding operation and a function of the second access network device in the foregoing method embodiments. For example, the communication apparatus 800 may be a second access network device, or may be a component (such as, a chip or a circuit) used in the second access network device. The sending unit 810 and the receiving unit 820 may be configured to perform all receiving or sending operations performed by the second access network device in the foregoing method embodiments, and/or another process for supporting the technology described in this specification. The processing unit 830 is configured to perform all operations performed by the second access network device in the foregoing method embodiments except the sending and receiving operations, and/or another process for supporting the technology described in this specification.

In some embodiments, the receiving unit 820 is configured to receive a first message from a first access network device, where first information includes PLMN identification information of a target cell of a terminal device served by the first access network device, a CGI of a target cell of a terminal device served by the first access network device, or a first PCI and a first ARFCN. The first PCI is a physical cell identifier of the target cell of the terminal device served by the first access network device, and the first downlink ARFCN is a downlink ARFCN of the target cell of the terminal device served by the first access network device. The processing unit 830 is configured to generate a key based on the first information or based on the PCI and the downlink ARFCN of the target cell that are determined based on the first information. The sending unit 810 is configured to send a second message to a second access network, where the second message is for transferring context information of the terminal device, and the second message includes the generated key. For details, refer to FIG. 3, FIG. 4, and the descriptions of the corresponding method embodiments. Details are not described herein again.

In some other embodiments, the receiving unit 820 is configured to receive a first message from a first access network device, where the first message includes a first cell identity. The first cell identity is a unique cell identity that is of a target cell of a terminal device served by the first access network device and that is within a public land mobile network PLMN. The processing unit 830 is configured to determine a plurality of candidate target cells having the first cell identity, and generate a plurality of keys corresponding to the plurality of candidate target cells. The sending unit 810 is configured to send a second message to a second access network, where the second message is for transferring context information of the terminal device, and the second message includes the plurality of keys and cell information of the candidate target cells respectively corresponding to the plurality of keys. For details, refer to FIG. 5 and the descriptions of the corresponding method embodiment. Details are not described herein again.

In some other embodiments, the receiving unit 820 is configured to receive a first message from a first access network device, where the first message includes a first cell identity. The first cell identity is a unique cell identity that is of a target cell of a terminal device served by the first access network device and that is within a public land mobile network PLMN. The processing unit 830 is configured to determine to reject transfer of context information of the terminal device when there are a plurality of candidate target cells having the first cell identity. The sending unit 810 is configured to send a third message to a second access network, where the third message indicates that the context information of the terminal device fails to be transferred. For details, refer to FIG. 6 and the descriptions of the corresponding method embodiment. Details are not described herein again.

In some other embodiments, the receiving unit 820 is configured to receive a first message from a first access network device, where the first message includes a first cell identity. The first cell identity is a unique cell identity that is of a target cell of a terminal device served by the first access network device and that is within a public land mobile network PLMN. The processing unit 830 is configured to determine the target cell based on the first cell identity and a PLMN identifier of the terminal device served by the second access network device. For example, the processing unit 830 determines that a cell that is served by the first access network device and that has the first cell identity and the PLMN identifier of the second access network device is the target cell. The processing unit 830 is further configured to generate a key based on a PCI and a downlink ARFCN of the target cell. The sending unit 810 is configured to send a second message to the second access network, where the second message is for transferring context information of the terminal device, and the second message includes the generated key. For details, refer to FIG. 7 and the descriptions of the corresponding method embodiment. Details are not described herein again.

It should be understood that the processing unit 830 in this embodiment of this application may be implemented by a processor or a processor-related circuit component. The sending unit 810 and the receiving unit 820 may be implemented by a transceiver, or a transceiver-related circuit component.

The storage unit in the foregoing embodiment may be implemented by using a memory.

FIG. 9 shows a communication apparatus 900 according to an embodiment of this application. The communication apparatus 900 may be an access network device, and can implement a function of the first access network device or the second access network device in the methods provided in embodiments of this application. Alternatively, the communication apparatus 900 may be an apparatus that can support the first access network device or the second access network device in implementing a corresponding function in the methods provided in embodiments of this application. The communication apparatus 900 may be a chip system. In this embodiment of this application, the chip system may include a chip, or may include a chip and another discrete device.

The communication apparatus 900 includes at least one processor 920, configured to implement or support the communication apparatus 900 in implementing the function of the first access network device or the second access network device in the methods provided in embodiments of this application. For details, refer to the detailed descriptions in the method examples. Details are not described herein again.

The communication apparatus 900 may further include at least one memory 930, configured to store program instructions and/or data. The memory 930 is coupled to the processor 920. The coupling in this embodiment of this application is indirect coupling or a communication connection between apparatuses, units, or modules in an electrical form, a mechanical form, or another form, and is for information exchange between the apparatuses, the units, or the modules. The processor 920 may operate in collaboration with the memory 930. The processor 920 may execute the program instructions and/or the data stored in the memory 930, so that the communication apparatus 900 implements a corresponding method. Optionally, at least one of the at least one memory may be included in the processor.

The communication apparatus 900 may further include a communication interface 910, configured to communicate with another device through a transmission medium, so that an apparatus used in the communication apparatus 900 may communicate with the another device. For example, when the communication apparatus is the first access network device or the second access network device, the another device is a terminal device. The processor 920 may send and receive data through the communication interface 910. The communication interface 910 may be specifically a transceiver. For example, the sending unit 810 and the receiving unit 820 form the communication interface 910.

A specific connection medium between the communication interface 910, the processor 920, and the memory 930 is not limited in this embodiment of this application. For example, in this embodiment of this application, in FIG. 9, the memory 930, the processor 920, and the communication interface 910 are connected through a bus 940. The bus is represented by a bold line in FIG. 9. A connection manner between other components is merely an example for description, and is not limited thereto. The bus may be classified into an address bus, a data bus, a control bus, and the like. For ease of representation, only one bold line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware and software modules in the processor.

In this embodiment of this application, the memory 930 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

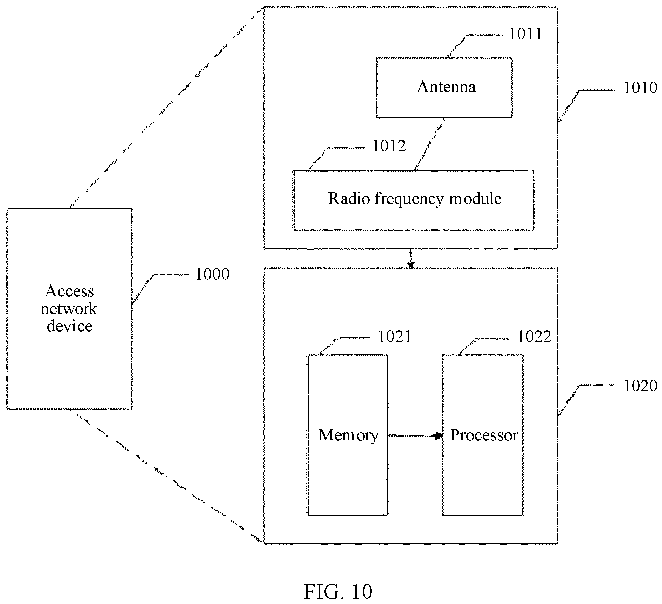

FIG. 10 is a simplified schematic diagram of a structure of a communication apparatus. For ease of understanding and illustration, in FIG. 10, an access network device is used as an example of the communication apparatus. The access network device may be applied to the system shown in FIG. 1, may be the network device in FIG. 1, and performs a function of the access network device in the foregoing method embodiments. The access network device 1000 may include one or more radio frequency units 1010, such as a remote radio unit (remote radio unit, RRU) or an active antenna unit (Active Antenna Unit, AAU) and one or more baseband units (baseband units, BBUs) (which also referred to as digital units, digital units, DUs) 1020. The radio frequency unit 1010 may be referred to as a communication module. Optionally, the communication module may also be referred to as a transceiver machine, a transceiver circuit, a transceiver, or the like, and may include at least one antenna 1011 and a radio frequency module 1012. The radio frequency unit 1010 is mainly configured to receive and send a radio frequency signal and perform conversion between the radio frequency signal and a baseband signal. The BBU 1020 is mainly configured to perform baseband processing, control the access network device, and the like. The radio frequency unit 1010 and the BBU 1020 may be physically disposed together, or may be physically disposed separately, namely, a distributed access network device.

The BBU 1020 is a control center of the access network device, and may also be referred to as a processing module. The BBU 1020 is mainly configured to complete a baseband processing function, such as channel coding, multiplexing, modulation, and spectrum spreading. For example, the BBU 1020 (the processing module) may be configured to control the access network device to perform an operation procedure of the access network device in the foregoing method embodiments.

In an example, the BBU 1020 may include one or more boards. A plurality of boards may jointly support a radio access network (for example, an LTE network or an NR network) of a single access standard, or may separately support radio access networks (for example, the LTE network, the NR network, or a network of another standard) of different access standards. The BBU 1020 further includes a memory 1021 and a processor 1022. The memory 1021 is configured to store necessary instructions and data. The processor 1022 is configured to control the access network device to perform a necessary action, for example, configured to control the access network device to perform the operation procedure of the access network device in the foregoing method embodiments. The memory 1021 and the processor 1022 may serve one or more boards. To be specific, the memory and the processor may be disposed on each board. Alternatively, a plurality of boards may share a same memory and a same processor. In addition, a necessary circuit may be further disposed on each board.

An embodiment of this application further provides a communication system. Specifically, the communication system may include a first access network device and a second access network device, or may include a plurality of first access network devices and a plurality of second access network devices. Optionally, the communication system may further include at least one terminal device. For example, the communication system includes a first access network device and a second access network device that are configured to implement a related function in FIG. 3, the communication system includes a first access network device and a second access network device that are configured to implement a related function in FIG. 4, the communication system includes a first access network device and a second access network device that are configured to implement a related function in FIG. 5, the communication system includes a first access network device and a second access network device that are configured to implement a related function in FIG. 6, the communication system includes a first access network device and a second access network device that are configured to implement a related function in FIG. 7, or the communication system includes a first access network device and a second access network device that are configured to implement related functions in embodiments in at least two of FIG. 2 to FIG. 7.

An embodiment of this application further provides a computer-readable storage medium, including instructions. When the instructions are run on a computer, the computer is enabled to perform the method performed by a first access network device or a second access network device in FIG. 3, FIG. 4, FIG. 5, FIG. 6, or FIG. 7.

An embodiment of this application further provides a computer program product, including instructions. When the instructions are run on a computer, the computer is enabled to perform the method performed by a first access network device or a second access network device in FIG. 3, FIG. 4, FIG. 5, FIG. 6, or FIG. 7.

An embodiment of this application provides a chip system. The chip system includes a processor, and may further include a memory, configured to implement functions of a first access network device and a second access network device in the foregoing methods. The chip system may include a chip, or include a chip and another discrete device.

It should be understood that the terms "system" and "network" may be used interchangeably in embodiments of this application. "At least one" means one or more, and "a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be one or more.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first message and a second message are merely for distinguishing between different messages, but do not indicate different priorities, sending sequences, or importance of the two messages.

It should be understood that, the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be further understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, a discrete gate, a transistor logic device, or a discrete hardware component, the memory (a storage module) is integrated into the processor.

It should be noted that the memory described in this specification is intended to include but not limited to these memories and any memory of another appropriate type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive, Solid-State Drive (SSD)), or the like.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
receiving, by a second access network device, a first message from a first access network device, wherein the first message is for requesting to transfer context information of a terminal device, and the first message comprises first information, wherein the first information comprises public land mobile network PLMN identification information of a target cell of the terminal device served by the first access network device, the first information comprises a cell global identifier CGI of the target cell of the terminal device served by the first access network device, or the first information comprises a first physical cell identifier PCI and a first downlink absolute radio frequency channel number ARFCN, wherein the first PCI is a physical cell identifier of the target cell of the terminal device served by the first access network device, and the first downlink ARFCN is a downlink ARFCN of the target cell of the terminal device served by the first access network device;
generating, by the second access network device, a key based on the first information; and
sending, by the second access network device, a second message to the first access network device, wherein the second message is for transferring the context information of the terminal device, and the second message comprises the key.

2. The method according to claim 1, wherein the generating, by the second access network device, a key based on the first information comprises:
determining, by the second access network device, the target cell based on the PLMN identification information or the CGI; and
generating, by the second access network device, the key based on the PCI and the downlink ARFCN of the target cell.

3. The method according to claim 1, wherein the generating, by the second access network device, a key based on the first information comprises:
generating, by the second access network device, the key based on the first PCI and the first downlink ARFCN.

4. The method according to any one of claims 1 to 3, wherein
the first message is a retrieve user equipment context request message, and the second message is a retrieve user equipment context response message.

5. A communication method, wherein the method comprises:
sending, by a first access network device, a first message to a second access network device, wherein the first message is for requesting to transfer context information of a terminal device, and the first message comprises first information, wherein the first information comprises public land mobile network PLMN identification information of a target cell of the terminal device served by the first access network device, the first information comprises a cell global identifier CGI of the target cell of the terminal device served by the first access network device, or the first information comprises a first physical cell identifier PCI and a first downlink absolute radio frequency channel number ARFCN, wherein the first PCI is a physical cell identifier of the target cell of the terminal device served by the first access network device, and the first downlink ARFCN is a downlink ARFCN of the target cell of the terminal device served by the first access network device;
receiving, by the first access network device, a second message from the second access network device, wherein the second message is for transferring the context information of the terminal device, the second message comprises a key, and the key is generated based on the first information; and
communicating with, by the first access network device, the terminal device based on the key.

6. The method according to claim 5, wherein
the first message is a retrieve user equipment context request message, and the second message is a retrieve user equipment context response message.

7. The method according to claim 1 or 2, wherein before the sending, by a first access network device, a first message to a second access network device, the method further comprises:
receiving, by the first access network device, a radio resource control RRC resume request message or an RRC re-establishment request message from the terminal device.

8. A communication method, wherein the method comprises:
receiving, by a second access network device, a first message from a first access network device, wherein the first message is for requesting to transfer context information of a terminal device, the first message comprises a first cell identity, and the first cell identity is a unique cell identity that is of a target cell of the terminal device served by the first access network device and that is within a public land mobile network PLMN;
determining, by the second access network device, a plurality of candidate target cells having the first cell identity;
generating, by the second access network device, a plurality of keys corresponding to the plurality of candidate target cells; and
sending, by the second access network device, a second message to the first access network device, wherein the second message is for transferring the context information of the terminal device, and the second message comprises the plurality of keys and cell information of the candidate target cells respectively corresponding to the plurality of keys.

9. The method according to claim 8, wherein the determining, by the second access network device, a plurality of candidate target cells having the first cell identity comprises:
determining, by the second access network device, the plurality of candidate target cells that are served by the first access network device and that have the first cell identity.

10. The method according to claim 8 or 9, wherein the generating, by the second access network device, a plurality of keys corresponding to the plurality of candidate target cells comprises:
generating, by the second access network device, a corresponding key based on a physical cell identifier PCI and a downlink absolute radio frequency channel number ARFCN of each of the plurality of candidate target cells.

11. The method according to any one of claims 8 to 10, wherein
the cell information of the candidate target cell comprises PLMN identification information of the candidate target cell, the cell information of the candidate target cell comprises a cell global identifier CGI of the candidate target cell, or the cell information of the candidate target cell comprises a physical cell identifier PCI of the candidate target cell and a downlink ARFCN of the candidate target cell.

12. The method according to any one of claims 8 to 11, wherein
the first message is a retrieve user equipment context request message, and the second message is a retrieve user equipment context response message.

13. A communication method, wherein the method comprises:
sending, by a first access network device, a first message to a second access network device, wherein the first message is for requesting to transfer context information of a terminal device, the first message comprises a first cell identity, and the first cell identity is a unique cell identity that is of a target cell of the terminal device served by the first access network device and that is within a public land mobile network PLMN;
receiving, by the first access network device, a second message from the second access network device, wherein the second message is for transferring the context information of the terminal device, the second message comprises a plurality of keys and cell information of candidate target cells respectively corresponding to the plurality of keys, and the candidate target cells are cells having the first cell identity;
selecting, by the first access network device based on the cell information of the candidate target cells, a key corresponding to the target cell; and
communicating with, by the first access network device, the terminal device based on the key.

14. The method according to claim 13, wherein
the candidate target cells are cells that are served by the first access network device and that have the first cell identity.

15. The method according to claim 13 or 14, wherein
the cell information of the candidate target cell comprises public land mobile network PLMN identification information of the candidate target cell, the cell information of the candidate target cell comprises a cell global identifier CGI of the candidate target cell, or the cell information of the candidate target cell comprises a physical cell identifier PCI of the candidate target cell and a downlink absolute radio frequency channel number ARFCN of the candidate target cell.

16. The method according to claim 15, wherein the selecting, by the first access network device based on the cell information of the candidate target cells, a key corresponding to the target cell comprises:
selecting, by the first access network device, a key corresponding to a candidate target cell that has same PLMN identification information as the target cell, selecting, by the first access network device, a key corresponding to a candidate target cell that has a same CGI as the target cell, or selecting, by the first access network device, a key corresponding to a candidate target cell that has a same PCI and a same downlink ARFCN as the target cell.

17. The method according to any one of claims 13 to 16, wherein
the first message is a retrieve user equipment context request message, and the second message is a retrieve user equipment context response message.

18. The method according to any one of claims 13 to 17, wherein before the sending, by a first access network device, a first message to a second access network device, the method further comprises:
receiving, by the first access network device, a radio resource control RRC resume request message or an RRC re-establishment request message from the terminal device.

19. A communication method, wherein the method comprises:
receiving, by a second access network device, a first message from a first access network device, wherein the first message is for requesting to transfer context information of a terminal device, the first message comprises a first cell identity, and the first cell identity is a unique cell identity that is of a target cell of the terminal device served by the first access network device and that is within a public land mobile network PLMN;
determining, by the second access network device, the target cell based on the first cell identity and a PLMN identifier of the terminal device served by the second access network device;
generating, by the second access network device, a key based on a physical cell identifier PCI and a downlink absolute radio frequency channel number ARFCN of the target cell; and
sending, by the second access network device, a second message to the first access network device, wherein the second message is for transferring the context information of the terminal device, and the second message comprises the key.

20. The method according to claim 19, wherein the determining, by the second access network device, the target cell based on the first cell identity and a PLMN identifier of the terminal device served by the second access network device comprises:
determining, by the second access network device, that a cell that is of the first access network device and that has the first cell identity and the PLMN identifier of the second access network device is the target cell.

21. The method according to claim 19 or 20, wherein
the first message is a retrieve user equipment context request message, and the second message is a retrieve user equipment context response message.

22. A communication apparatus, comprising at least one unit configured to implement the method according to any one of claims 1 to 21.

23. A communication apparatus, comprising at least one processor and a memory, wherein
the memory is configured to store program code; and
the processor is configured to execute the program code, to enable the communication apparatus to perform the method according to any one of claims 1 to 21.

24. A communication system, wherein the communication system comprises a communication apparatus that performs the communication method according to any one of claims 1 to 4 and a communication apparatus that performs the communication method according to any one of claims 5 to 7, a communication apparatus that performs the communication method according to any one of claims 8 to 12 and a communication apparatus that performs the communication method according to any one of claims 13 to 18, or a communication apparatus that performs the communication method according to any one of claims 19 to 21.

25. A computer-readable storage medium, wherein the computer-readable storage medium stores a computer program; and when the computer program is executed, the method according to any one of claims 1 to 21 is implemented.

26. A computer program product, wherein the computer program product comprises instructions; and when the instructions are executed, the method according to any one of claims 1 to 21 is implemented.
